(19) Europäisches Patentamt
European Patent Office
Office européen des brevets

(11) EP 1 988 150 A1

(12) EUROPEAN PATENT APPLICATION

(43) Date of publication:
05.11.2008 Bulletin 2008/45

(51) Int Cl.:
*C12C 1/02* (2006.01)    *C12C 1/047* (2006.01)

(21) Application number: 07290562.3

(22) Date of filing: 04.05.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicants:
• Laboratoire des Sciences du Genie Chimique
54001 Nancy Cedex (FR)
• IFBM (Institute Francais des Bissons de la
Brasserie et de la Malterie)
54500 Vandoeuvre les Nancy (FR)
• Swan Malt France
51100 Reims (FR)

(72) Inventors:
• Guiga, Wafa
54000 Nancy (FR)
• Fick, Michel
54710 Ludres (FR)
• Ouarnier, Nathalie
54500 Vandoeuvre-les-Nancy (FR)
• Boivin, Patrick
54810 Messein (FR)

(74) Representative: Vaillant, Jeanne et al
Ernest Gutmann - Yves Plasseraud S.A.S.
3, rue Auber
75009 Paris (FR)

(54) **Malt house process and equipment with sleep water recycle**

(57) The present invention concerns a malting process (steeping, germination and kilning), steeping being at least partially carried out with recycled steep water, barley germination inhibitors having been eliminated therefrom. It also concerns a process for eliminating said inhibitors from steep water from a malt house by passing the steep water into a bioreactor and membrane filtration, and to the use of a bioreactor coupled to an ultrafiltration or microfiltration device to eliminate germination inhibitors.

It concerns malt house equipment comprising a steeping tank (1), an aerated bioreactor (2), a filtration device (3), an optional reverse osmosis device (4), means (5, 7, 8, 9, 9', 10, 13) feeding the steep water from the tank (1) to the bioreactor (2), from the bioreactor (2) to the filtration device(s) and from the filtration device(s) (3, 4) to the steeping tank (1).

Fig. 1

**Description**

The present invention relates to a malting process in which the steep water is recycled, barley germination inhibitors having been eliminated, and to malt house equipment comprising a bioreactor and at least one membrane filtration device.

In the brewing industry, the malting process consists of limited controlled germination of barley grain, barley germination being stopped during kilning. The aim of the malting process is to induce physical and biochemical modifications in the barley grain, which modifications are necessary for the steps of mashing and fermentation of the wort to be carried out properly in the brewery.

The principal steps of the malting process are steeping, germination and kilning:

- steeping washes and wets the grain. The moisture content of the grain changes thereby from about 12% to 15% to about 42% to 45%. This step can also trigger the biochemical activities of the grain. They occur by alternating steps for immersing the grain in water, "water steps", with aeration steps "air steps", during which the steep water is evacuated;
- germination can result in major structural and biochemical modifications in the grain. It is carried out in a moist atmosphere;
- by drying the grain, kilning can stop the development of the embryo and develop the necessary color and aroma, and results in the malt.

The usual malting process thus requires large quantities of water, especially the water used for steeping. Steep water is waste water which comes from each of the water steps. It constitutes the principal source of waste water in the malting process and is usually discharged. To produce 1 liter of malt, the malting process consumes 5 to 10 liters of water which are usually discharged.

Until now, the waste water from the malting process has been treated before discharging it with the sole aim of improving the quality of the discharge from malt houses.

Conventional treatments used in malt house purification stations comprise steps for physical treatment (screening) and chemical treatment (coagulation, flocculation), followed by a biological treatment in an aeration tank. The sludge produced is generally settled in clarifiers, the supernatant possibly then undergoing complementary treatments depending on their destination (filtration, ultraviolet, chlorine).

Until now, no steep water has ever been recycled to the malting process per se. The quality of the water used in a malt house is essential, especially for sanitary and taste reasons linked to the biological process of malting. However, steep water has been shown to be a discharge which is loaded with microflora, organic compounds, salts, heavy metals and plant protection products.

Because of the possible impact of steep water on malting and in particular on germination, and on the quality of the beer obtained, steep water has never been recycled to a malting process, especially to the steep.

The present invention concerns a malting process in which the steep water is recycled, after barley germination inhibitors have been eliminated, even though recycling of such a discharge could not been envisaged; nor indeed has the elimination of inhibitors, in particular polyphenols, by a simple filtration step.

In this process, the malt house steep water is treated biologically using sludge from a malt house purification station and re-used, especially for steeping. Thus, steeping is carried out, the steep water is recovered, the recovered steep water is treated to reduce the inhibiting power or eliminate the germination inhibitors and the treated steep water is recycled to the steeping step.

According to the invention, this biological treatment is coupled to a membrane filtration step. Filtration can produce treated water which is free of microorganisms and purified of barley germination inhibitors.

Biological treatment coupled to the filtration treatment step, whether filtration is carried out with immersed or external membranes, may also be followed by a step for treating the filtrate or permeate by reverse osmosis.

Thus, the present invention concerns a malting process comprising at least a steeping step, a germination step and a kilning step, in which the steeping step is at least partially carried out with recycled steep water, barley germination inhibitors having been eliminated therefrom.

The invention concerns a process for eliminating barley germination inhibitors from steep water from a malt house, by passing the steep water into a bioreactor and filtering on a membrane.

The invention also concerns the use of a bioreactor coupled to an ultrafiltration or microfiltration membrane filtration device, to eliminate germination inhibitors from steep water from a malting process.

The term "bioreactor" means a tank in which the effluent is treated biologically. Hence, the micro-organisms present in the tank eliminate pollutant compounds by consuming them.

The term "membrane filtration" means ultrafiltration or microfiltration. Said filtration may optionally be followed by a reverse osmosis treatment.

The term "elimination of germination inhibitors" means a reduction of the order of 70% of the inhibiting power, measured using the test discussed below, the inhibiting power preferably changing to a value of the order of 5% or less, preferably 2% or less.

The present invention also concerns malt house equipment comprising at least one steeping tank, an aerated bioreactor and a filtration device, and optionally a reverse osmosis device. More precisely, in addition to at least one steeping tank, such equipment comprises a bioreactor, a membrane filtration device and an optional reverse osmosis device, and means for recycling the steep water from the steeping tank through the bioreactor and the filtration device and/or reverse osmosis device to the steeping tank. The filtration device is a microfiltration or ultrafiltration device.

Said means for recycling steep water, which are known per se to the skilled person for carrying out a recycle, comprise, as far as is necessary, passages for water, sludge and air, valves and circulation pumps, buffer tanks, chillers and tanks for storing treated water or part-treated water, which means that the steep water can be fed from the steeping tank to the bioreactor then from the bioreactor to the filtration device(s) and from these filtration device(s) to the steeping tank.

To rationalize recycling, in the usual manner the equipment may also comprise at least one steeping tank and/or a tank for storing steep water before or after its treatment.

The invention will be better understood from the following detailed description and examples and from the accompanying drawings.

Figure 1 is a diagrammatic representation of equipment for recycling steep water in accordance with the invention;
Figure 2 shows a diagram of a bioreactor coupled to an immersed membrane filtration device (Sys 1) to carry out the process of the invention.

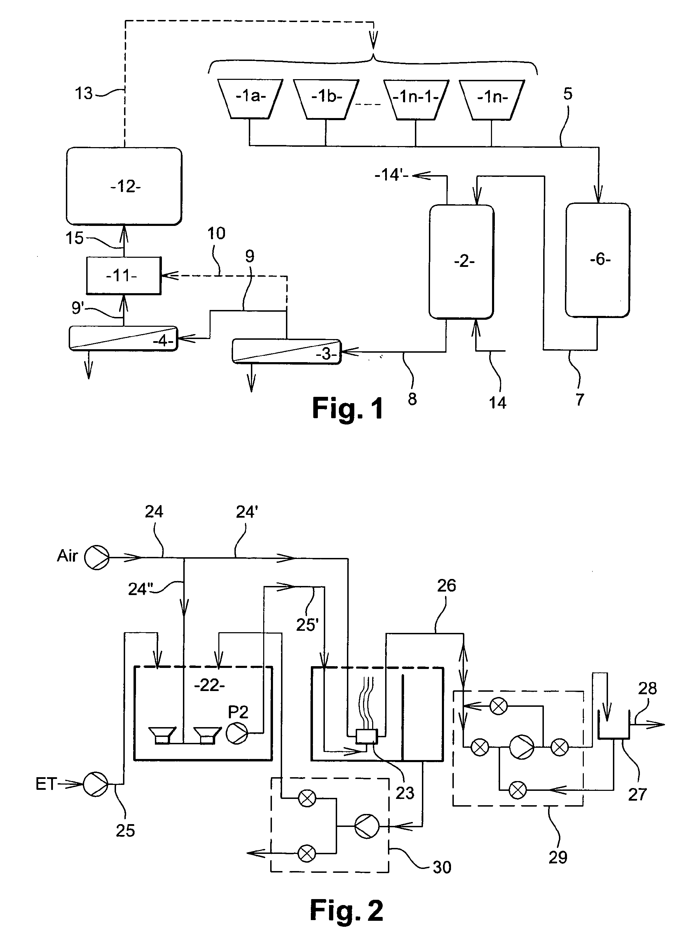

As can be seen in Figure 1, the steeping equipment for malting comprising conventional steeping tanks (1 to n) has been supplemented with a buffer tank 6, a bioreactor 2 and at least one filtration device 3, and reverse osmosis equipment 4 which is optional, as well as a tank 12 for storing treated water. Aqueous fluid passages 5, 7, 8, 9, 9', 10, 15 and 13 feed the stream of steep water to be purified for recycling between these elements of the equipment. The air stream which aerates the bioreactor 2 is supplied and evacuated via passages 14 and 14'.

To control the temperature of the recycled water, it may be apposite to provide a chiller 11 at the outlet from the filtration and/or osmosis step. Although not shown in Figure 1, the recycle means also comprise devices required for measuring pressure, temperatures and parameters allowing adjustment of the aeration, the flow rate of the treated steep water and of the sludge, the cooling system and of the stream which is to undergo the optional reverse osmosis step.

In a first implementation, the bioreactor may be of the immersed membrane type, and thus comprises a membrane clearing system. In another implementation, the bioreactor may be of the external membrane type.

The choice of membrane filtration technique depends on the envisaged quality of the treated water. The size of the filtration and optional reverse osmosis equipment depends on the capacity of the malting equipment and the flow rate of the steep water to be treated. Microfiltration membranes may be used, the pore size of which may be between 0.1 $\mu$m [micrometer] and 10 $\mu$m, preferably of the order of 0.2 $\mu$m. They may be immersed. It is also possible to use ultrafiltration membranes, the pore size of which is from 0.001 $\mu$m to 0.1 $\mu$m, preferably 0.02 $\mu$m. The ultrafiltration membranes may be in the form of modules coupled to the bioreactor and outside it, this variation not necessitating a clearing system, but a clean-in-place device may then be provided.

Membranes which may be used to carry out filtration which may be cited include any type of microfiltration or ultrafiltration membrane with hollow fibers, or any other similar membrane. In addition, it is possible to use hollow or tubular fibers formed from cellulose acetate or from synthetic polymers, for example from polyamides or polysulfones, which may be external or immersed.

Any suitable type of reverse osmosis system may be used as the reverse osmosis device, for example a spiral, tubular or hollow fiber module, formed from cellulose acetate or synthetic polymers, for example polyamides or polysulfones.

As will be shown in the examples, the steep water treatment process is effective in eliminating barley germination inhibitors present in steep water. They have to be eliminated before recycling the steep water to the malting process in order to avoid perturbing germination and the water take-up of the barley grain, i.e. in general to avoid retarding germination and water take-up caused by their presence.

In particular, the germination process is inhibited by oxidation and polymerization reactions involving phenolic compounds which are liberated into the water during the steeping step.

These reactions are chemical reactions caused in particular by the metals present, and enzymatic reactions, caused in particular by the polyphenol oxidases present. The inhibiting action of these reactions is seated in the envelope of the barley grain.

The negative impact of untreated recycled steep water on the malting process is explained by the presence in this steep water of germination inhibiting compounds.

The Applicant has investigated and observed the role of phenolic compounds of barley in the inhibition of germination during the process. More precisely, it is the oxidation and polymerization reactions of these compounds which are the problem. The pericarp-testa, a semi-impermeable assembly which is rich in pro-anthocyanidins (condensed tannins), appears to be the seat of these inhibition phenomena. Oxidation and polymerization reactions of phenolic compounds in the pericarp-testa could cause strengthening of the grain walls, thus slowing down water take-up and plumule elongation.

The steep water treatment of the invention can eliminate germination inhibitors from recycled steep water, guaranteeing a malting quality comparable to that obtained on malting with potable water which does not derive from a recycle, and sufficient purification of water to satisfy the following aims:

- obtaining treated water of potable quality, which satisfies current regulations whereby the water entering a food process must be of potable quality;
- obtaining sufficiently purified water so that recycling it to the malting process has no impact on the quality of the product obtained.

The treated water preferably has a COD of less than 200 mg/l [milligrams/liter]. This corresponds to elimination of organic matter. Preferably, the recycled steep water used to carry out the steeping step has an inhibiting power of the order of 5% or less.

## EXAMPLE 1 (comparative):

## Recycling steep water without prior treatment

### 1) Characterization of steep water

The steep water from 10 British and French industrial sites and deriving from processes carried out under different conditions (steep, temperature, aeration, barley:water ratio) and with various varieties of barley were recovered and analyzed. These analyses allowed a mean composition for this water to be determined:

- COD: the total COD of the analyzed steep water was between 1 and 7 g/l [gram/liter];
- Organic acids: essentially citrate, $\alpha$-ketoglutarate, 1-malate, pyruvate, succinate, lactate, fumarate, acetate, propionate and butyrate. The total concentration of said acids: up to 2 g/1;
- Sugars: maltose was essentially identified (up to 0.85 g/1), but also glucose, galactose and fructose. The presence of oligomers was also observed;
- Heavy metals: the heavy metals which were analyzed include iron and manganese which were present in the steep water in concentrations which exceeded potable water limits;
- Phosphorus: total concentration up to 150 mg/1;
- Phenolic compounds: simple phenolic compounds were identified in the steep water: hydroxybenzoic acid, protocatechuic acid, syringic, vanillic acid, gallic acid, coumaric acid, ferulic acid. The concentration of each of these compounds was between 0.1 and 2 ppm [parts per million]. The total phenolic compound content was between 15 and 170 ppm;
- Microbial load: the bacterial load in the analyzed steep water was between $10^2$ and $10^7$ CFU/ml [colony forming units/ml];
- Molds: the genii *Mucor, Penicillium; Alternaria; Aspergillus* were identified;
- Pesticides: Chlormequat chloride, Fenpropimorph, Glyphosphate, Pirimiphos-methyl, Azoxystrobin, Bifenthrin, Pyperonyl butoxide, Deltamethrin, Dichlorvos, Fenpropimorph and Malathion were detected in the study steep water;
- Mycotoxins: Deoxynivalenol, Ochratoxin A, Cytochalasin E and Nivalenol were detected in some of the test steep water samples.

The negative impact of this water on germination was demonstrated by developing an inhibition test which allowed the inhibiting power of the various water samples to be tested on the same barley sample.

### 2) Description of inhibition test

To quantify the inhibiting power of a water sample, 100 grains of barley were placed in a Petri dish which was covered to prevent loss of moisture, the base of which contained a Whatman filter paper, in the presence of 8 ml of steep water. The number of grains which germinated was counted after incubating for 24 hours at 20°C in the dark.

For each series of tests, a reference test was carried out using the same batch of barley and distilled water.

The inhibiting power of a water sample is expressed as the percentage inhibition with respect to the reference test:

$$\%Inh = \frac{A\text{-}B}{A} \times 100$$

in which:

A is the number of germinated grains in 24 hours for the reference test;
B is the number of grains germinated in 24 h with the test water sample.

**3) Re-injection of steep water into steeping step of malting process**

Retarded water take-up by the grain was observed (<37% moisture at end of steep, instead of 42%); retarded germination and degradation of the quality of the malt (50% friability instead of a minimum of 80%). Recycling this water to the steeping step confirmed the negative impact on the proper conduct of the process. These problems with recycling the steep water were not compensated for by extending the steep time.

## Example 2

**Recycling treated steep water:**

**1. Equipment**

Two different systems were used:

For these two systems, the volume of sludge was of the order of 2 to 3 $m^3$, agitation was carried out by injecting air and the temperature was of the order of 24°C to 30°C. The volumes treated were of the order of 1 $m^3$ per day.

The equipment used in system 1 (sys 1) comprised:

**Immersed membrane bioreactor:**

1- Biological treatment

- aeration tank (bioreactor): 5 $m^3$;
- recycling and sludge purge pumps;
- measurement of dissolved oxygen and suspended matter.

2- Filtration

- pumps to feed membranes;
- immersed microfiltration membranes (0.2 $\mu$m); total surface area 9 $m^2$; "Puron" modules;
- pumps for permeate and recycling;
- system for clearing membranes (backwash);
- clean-in-place equipment;
- reverse osmosis membranes, total surface area 6 $m^2$; spiral modules from ITT.

As can be seen in Figure 2, which describes said system (sys 1) with immersed membranes, the bioreactor 22 is supplied with steep water (ET) via a passage 25 and with air via passages 24, 24". A pump P2 extracts sludge which is fed via the passage 25' to the microfiltration device comprising the membrane 23 supplied with air via the passage 24'. The permeate is fed via the passage 26 of the filtration device to a permeate storage tank 27 and is then recycled via the passage 28 to the steeping tank(s), not shown.

A system of valves and pumps, shown in the dotted rectangle 29, can be used to clear the membranes.

Further, the system of pumps and valves shown in the dotted rectangle 30 allows the sludge to be regulated and allows optimum adjustment of their concentration.

The equipment used in system 2 (sys 2) comprised the following elements:

**External membrane bioreactor:**

1- Biological treatment

- aeration tank (bioreactor): 5 m$^3$;
- recycle and sludge purge pumps;
- measurement of dissolved oxygen and suspended matter.

2- Filtration

- pumps to feed membranes;
- ultrafiltration membranes (0.02 μm); total surface area 16 m$^2$ (hollow fiber membranes - X-flow, 33GEF5385 from Norit, compact module);
- pumps for permeate and recycle;
- clean-in-place equipment;
- reverse osmosis membranes, Filmtech, total surface area 9 m$^2$.

**2. Results of treatment in purifying water**

2a. Qualification of water

The treatment of steep water by systems 1 and 2 with a membrane bioreactor produced water with a satisfactory physico-chemical and microbiological quality:

- a net reduction in the conductivity of the treated water and a net reduction in color were observed;
- the water treated by a microfiltration membrane bioreactor had a COD (system 1) of less than 200 mg/l. The water treated by ultrafiltration (system 2) had a COD of less than 100 mg/l. The complementary treatment by reverse osmosis eliminated this residual COD in both cases;
- biodegradation of soluble organic matter: almost all organic acids, sugars, proteins and phenolic compounds were eliminated;
- complementary treatment by reverse osmosis could bring all of the analyzed parameters within potability limits.

The use of ultrafiltration (system 2) in the membrane bioreactor system produced water with a better quality than with the microfiltration membranes (system 1), especially as regards residual COD and total polyphenols content.

This effective purification of steep water was accompanied by elimination of the inhibiting power, especially in the stationary state when the sludge had stabilized at its optimum concentration of the order of 8 g/l. Hence, the water treated by a microfiltration or ultrafiltration membrane bioreactor, with or without reverse osmosis, had a non significant inhibiting power (5% or less).

2b. Performance of malting and mashing process with treated water

Recycling the treated water to the malting process allowed malts with a quality comparable to that of a reference malt obtained with potable water to be obtained. As an example, the malt friability obtained after steeping the barley in the treated water of the invention was greater at 88%; the calcofluor disintegration was determined to be at least 97%, and the b-glucans between 104 and 117 mg/1.

Monitoring the mashing parameters (saccharification, wort filtration, mashing yield and extraction yield) as well as analysis of the wort quality (saccharification pH, viscosity of extract, color, bitterness, amino nitrogen and calcium) have shown that the malts obtained with the treated and recycled water were technically satisfactory, especially for the above mashing parameters and qualities.

Similarly, the results obtained for fermentation show that there are no significant differences between fermentation in a process with recycling and a reference fermentation, obtained with flowing potable water, especially as regards attenuation after 7 days, the diketones content on chilling and the filtration parameters.

Table I below shows the results of analyzing malts obtained with immersed membrane system 1 (MBR) and system 1 coupled with reverse osmosis (RO), compared with malts obtained with potable water (reference system 1).

Similarly, the results of a malt house process without recycling (reference system 2), i.e. carried out with potable water, were compared with the results for malts obtained with water recycled to system 2 with external membranes and to system 2 coupled to a reverse osmosis device.

Finally, as can be seen in Table II below, physico-chemical and sensory analyses of the beer obtained were satisfactory, and showed that it is possible to obtain a finished product of quality by recycling the steep water to the malting process.

**TABLE I**

| | System 1 | | | System 2 | | |
|---|---|---|---|---|---|---|
| Analysis of malts | Reference No recycle | MBR Recycle | MBR + RO Recycle | Reference No recycle | MBR Recycle | MBR + RO Recycle |
| Moisture content of malt (%) | 4.7 | 4.6 | 4.6 | 5.4 | 5.0 | 4.7 |
| Fine malt extract (% DM) | 82.9 | 83.0 | 83.2 | 83.6 | 83.7 | 83.5 |
| Total proteins (% DM) | 9.7 | 9.9 | 9.6 | 9.7 | 9.9 | 9.7 |
| Soluble proteins (% DM) | 3.88 | 3.87 | 4.02 | 4.10 | 4.08 | 4.03 |
| Kolbach index | 40 | 39 | 42 | 42 | 41 | 42 |
| Friability (%) | 90 | 88 | 91 | 87 | 88 | 90 |
| Whole grains (%) | 0.9 | 1.4 | 0.6 | 1.3 | 0.6 | 0.4 |
| Diastasic power (WK DM) | 280 | 270 | 280 | 290 | 270 | 270 |
| Attenuation limit (%) | 81.6 | 81.3 | 82.7 | 83.7 | 83.1 | 81.9 |
| Calcofluor disintegration (%) | 98 | 99 | 98 | 98 | 97 | 98 |
| Homogeneity (%) | 81 | 95 | 86 | 89 | 78 | 90 |
| a-amylase (DU 20°C) | 59 | 58 | 62 | 60 | 62 | 55 |
| b-glucans (mg/1) | 86 | 104 | 108 | 97 | 117 | 109 |
| Free amino nitrogen (mg/l) | 133 | 150 | 151 | 155 | 152 | 145 |
| Viscosity (mPa.s) | 1.49 | 1.53 | 1.51 | 1.50 | 1.52 | 1.53 |

(continued)

| Analysis of malts | | | | | | |
|---|---|---|---|---|---|---|
| | System 1 | | | System 2 | | |
| | Reference No recycle | MBR Recycle | MBR + RO Recycle | Reference No recycle | MBR Recycle | MBR + RO Recycle |
| | | | | | | |

WK: Windish Kolbach; DM: dry matter - Kolbach index (ratio of soluble proteins/total proteins).

**TABLE II**

| Analysis of beers | | Reference | MBR-SYS 1 | RO-SYS 1 | MBR-SYS2 | RO-SYS2 |
|---|---|---|---|---|---|---|
| Foam | Moy3 Bottles | 316 | 276 | 281 | 294 | 279 |
| Primary extract (° Plato) | | 11.40 | 11.74 | 11.54 | 11.70 | 11.54 |
| % alcohol (v/v) | | 4.92 | 5.01 | 5.11 | 5.14 | 5.13 |
| Attenuation, % | | 81.8 | 80.0 | 83.4 | 82.6 | 83.5 |
| Bitterness | | 26 | 27 | 26 | 26 | 26 |
| EBC color | | 5.9 | 6.3 | 5.4 | 5.6 | 5.1 |
| pH | | 4.26 | 4.29 | 4.29 | 4.29 | 4.29 |
| Diacetyl and other $\alpha$-ketones (mg/1) | | 0.19 | 0.17 | 0.16 | 0.19 | 0.15 |
| $CO_2$ (g/l) | | 3.6 | 4.5 | 5.3 | 3.9 | 3.8 |
| Brilliance | | 0.17 | 0.14 | 0.17 | 0.16 | 0.20 |
| Polyphenols (mg/l) | | 192 | 195 | 198 | 198 | 203 |
| $SO_2$ (mg/1) | | 6.1 | 8.8 | 9.6 | 9.6 | 8.8 |
| Colloidal stability prediction | Initial turbidity | 0.68 | 0.75 | 0.45 | 0.35 | 0.23 |
| | Final turbidity | 5.95 | 6.00 | 5.50 | 7.10 | 6.60 |
| Brilliance at 8°C | | 0.18 | 0.16 | 0.21 | 0.19 | 0.19 |
| Sensory analysis Global note | | 5.20 | 5.25 | 5.38 | 4.75 | 4.75 |

**Claims**

1. A malting process comprising at least a steeping step, a germination step and a kilning step, **characterized in that** the steeping step is at least partially carried out with recycled steep water, barley germination inhibitors having been eliminated therefrom.

2. A process according to claim 1, **characterized in that** the germination inhibitors are eliminated by aerating the steep water in a membrane bioreactor and passing the aerated steep water over a filtration membrane.

3. A process according to claim 1 or claim 2, **characterized in that** the germination inhibitors are eliminated by aerating the steep water in a bioreactor and passing the aerated steep water over a filtration membrane, and optional reverse osmosis.

4. A process according to one of claims 1 to 3, **characterized in that** the membrane filtration is ultrafiltration, microfiltration and/or reverse osmosis.

5. A process according to one of claims 1 to 4, **characterized in that** the filtration membranes are external or immersed microfiltration or ultrafiltration membranes.

6. A process according to one of claims 1 to 5, **characterized in that** the recycled steep water used to carry out the steeping step has an inhibiting power of the order of 5% or less.

7. Malt house equipment comprising at least one steeping tank (1), **characterized in that** it further comprises an aerated bioreactor (2), a filtration device (3), an optional reverse osmosis device (4), means for recycling steep water (5, 7, 8, 9, 9', 10, 13) from the tank (1), feeding it from the tank (1) to the bioreactor (2) and from the bioreactor (2) to the filtration device(s) (3, 4) and from the filtration device(s) (3, 4) to the steeping tank (1).

8. Equipment according to claim 7, **characterized in that** it further comprises a buffer tank (6), a storage tank (12) and/or a chiller.

9. Use of a bioreactor coupled to an ultrafiltration or microfiltration membrane filtration device to eliminate germination inhibitors from the steep water from a malting process, the membranes being external or immersed.

10. Use according to claim 9, in which a reverse osmosis device is also used.

11. A process for eliminating barley germination inhibitors from steep water from a malt house by passing the steep water into a bioreactor and membrane filtration.

**Fig. 1**

**Fig. 2**

**European Patent Office**

**EUROPEAN SEARCH REPORT**

Application Number

EP 07 29 0562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUNKEL, J.: "Untersuchungen zur organischen und mikrobiologischen Belastung von Weichwasser" MONATSSCHRIFT FÜR BRAUWISSENSCHAFT, vol. 51, no. 5,6, 1998, pages 72-81, XP008082732 | 1,6,9-11 | INV. C12C1/02 C12C1/047 |
| A | * the whole document * | 2-5,7,8 | |
| X | US 3 205 152 A (KARL GEYS) 7 September 1965 (1965-09-07) * column 3, lines 35-57 * | 1,6 | |
| X | DE 14 42 133 A1 (NONN PAUL) 6 March 1969 (1969-03-06) * the whole document * | 1,6 | |
| X | WO 01/43531 A (MAXWELL DAVIDSON LTD [GB]; DAVIDSON MAXWELL WINGATE [GB]) 21 June 2001 (2001-06-21) * page 9, line 23 - page 11, line 27 * | 1,6-8 | |
| X | DE 15 17 765 A1 (LENZ CONRAD) 29 January 1970 (1970-01-29) * the whole document * | 1,6 | TECHNICAL FIELDS SEARCHED (IPC) C12C |
| X | GB 2 258 243 A (MINCH NORTON DEV LTD [IE]) 3 February 1993 (1993-02-03) * claims * | 1,6 | |
| X | KIENINGER, GRAF: "Die Wiederverwendung des Gerstenweichwassers und sein Einfluss auf die BEschaffenheit von Malz, Würze und Bier" BRAUWELT, vol. 113, no. 31,32, 1972, pages 643-649,652, XP008082729 | 1,6 | |
| A | * the whole document * | 2-5,7-11 | |

-/--

The present search report has been drawn up for all claims

| Place of search | Date of completion of the search | Examiner |
|---|---|---|
| The Hague | 22 August 2007 | Koch, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 29 0562

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 21 13 912 A1 (FORTSCHRITT VEB K) 21 October 1971 (1971-10-21) * page 1 - page 2, paragraph 1 * ----- | 1-11 | |
| | | | TECHNICAL FIELDS SEARCHED (IPC) |

The present search report has been drawn up for all claims

| Place of search | Date of completion of the search | Examiner |
|---|---|---|
| The Hague | 22 August 2007 | Koch, Jürgen |

EPO FORM 1503 03.82 (P04C01)

## ANNEX TO THE EUROPEAN SEARCH REPORT
## ON EUROPEAN PATENT APPLICATION NO.

EP 07 29 0562

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2007

| Patent document cited in search report | | Publication date | Patent family member(s) | | Publication date |
|---|---|---|---|---|---|
| US 3205152 | A | 07-09-1965 | GB | 983713 A | 17-02-1965 |
| | | | LU | 41520 A1 | 09-06-1962 |
| | | | NL | 277298 A | |
| DE 1442133 | A1 | 06-03-1969 | NONE | | |
| WO 0143531 | A | 21-06-2001 | AU | 778959 B2 | 23-12-2004 |
| | | | AU | 2380901 A | 25-06-2001 |
| | | | EP | 1239721 A2 | 18-09-2002 |
| | | | NZ | 520144 A | 30-07-2004 |
| DE 1517765 | A1 | 29-01-1970 | NONE | | |
| GB 2258243 | A | 03-02-1993 | IE | 912694 A1 | 10-02-1993 |
| | | | ZA | 9204434 A | 07-04-1993 |
| DE 2113912 | A1 | 21-10-1971 | NONE | | |

EPO FORM P0459

For more details about this annex : see Official Journal of the European Patent Office, No. 12/82